# EUROPEAN PATENT SPECIFICATION

(11) **EP 3 068 649 B1**
(45) Date of publication and mention of the grant of the patent: **21.03.2018**
(21) Application number: 14812628.7
(22) Date of filing: 11.11.2014
(51) Int. Cl.: B60K 7/00, B60K 17/04, B60B 11/02

(54) **APPLIANCE WITH MOTORIZED WHEELS**
VORRICHTUNG MIT MOTORISIERTEN RÄDERN
BLOC À ROUES MOTORISÉES

(30) Priority: 14.11.2013 IT MO20130314
(43) Date of publication of application: 21.09.2016
(73) Proprietor: Borghi Assali S.r.l., 41030 Bomporto (MO) (IT)
(72) Inventor: BORGHI, Ivan, I-41030 Bomporto (MO) Frazione Villavara (IT)
(74) Representative: Brunacci, Marco
(86) International application number: PCT/IB2014/065962
(87) International publication number: WO 2015/071828

(56) References cited:
- AU-B2- 561 046
- US-A- 3 280 931
- US-A- 4 799 564
- US-A- 5 624 004

## Description

### Technical Field

The present invention relates to an appliance with motorized wheels for vehicles especially intended for the use in the military and agricultural sectors and in that of the transport of heavy loads.

### Background Art

Motorized wheels are known for vehicles such as fork-lift trucks or vehicles for transporting heavy loads, each composed of a wheel and of a gear motor.

In actual fact, the truck has four wheels which can be operated independently the one from the other by respective motors connected directly to the axle of wheels and arranged alongside these.

In detail, the motors are arranged on the inner side of the wheels turned towards the truck platform.

Although the introduction of the motorized wheels, by eliminating the use of the axles, has freed space within the platform which can be used either to contain other components or to make maintenance easier, the current solution is not however satisfactory.

In fact, because the motors associated with the wheels have far from small overall dimensions, the lateral extension of the platform in correspondence to the pairs of wheels is in any case very limited by the fact of having to provide specific spaces to freely accommodate the motors themselves.

Another drawback consists in the fact that the known motorized wheels, when used in vehicles to transport heavy loads, have to be of large dimensions with wide and high tyres, with the result that the centre of gravity of the load is very high.

Another drawback is due to the fact that the motorized wheels of known type have shown themselves to be not very efficient for use on uneven ground.

US 3280931 describes an appliance according to the preamble of claim 1.

### Description of the Invention

The main aim of the present invention is to provide an appliance with motorized wheels with reduced overall dimensions with respect to the motorized wheels of prior art.

Within this aim, one object of the invention is to provide an appliance with motorized wheels able to withstand the same load as the known motorized wheels, but with a lower centre of gravity.

Another object of the present invention is to provide an appliance with motorized wheels which allows to overcome the mentioned drawbacks of the prior art within the framework of a simple, rational, easy, effective to use and affordable solution.

The above mentioned objects are achieved by the present appliance with motorized wheels made in accordance with claim 1.

### Brief Description of the Drawings

Other characteristics and advantages of the present invention will become better evident from the description of a preferred, but not exclusive embodiment, of an appliance with motorized wheels, illustrated by way of an indicative, but not limitative example in the accompanying drawings wherein:

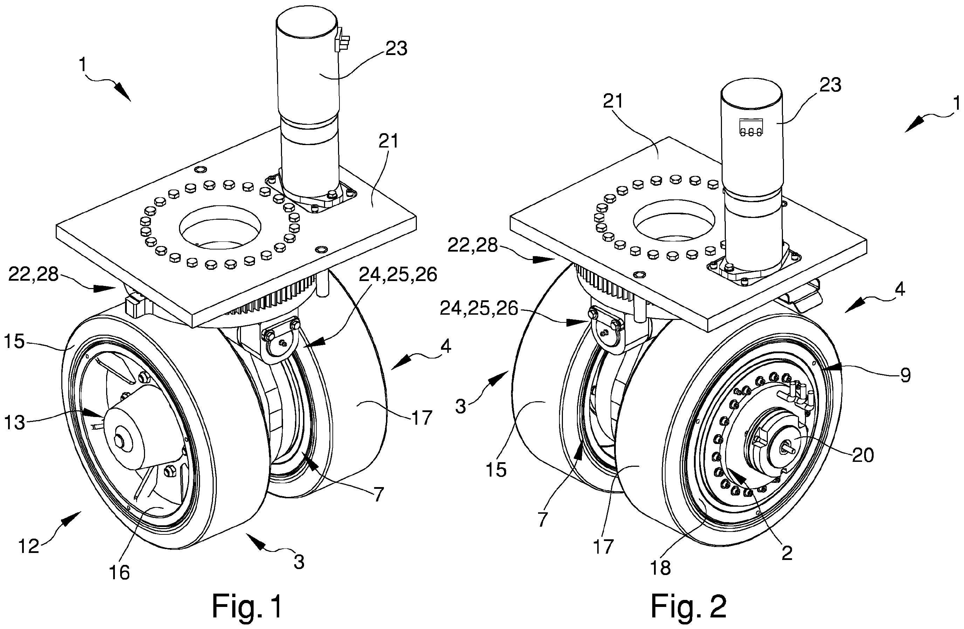

Figure 1 and Figure 2 are axonometric views of the appliance with motorized wheels according to the invention which are rotated the one with respect to the other;

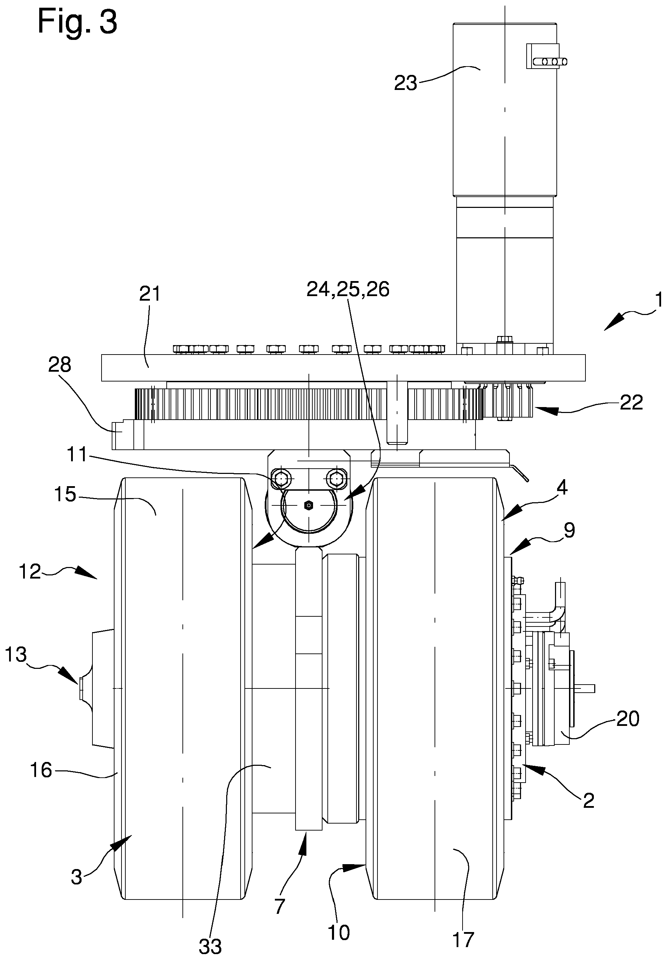

Figure 3 is a front view of the appliance with motorized wheels according to the invention;

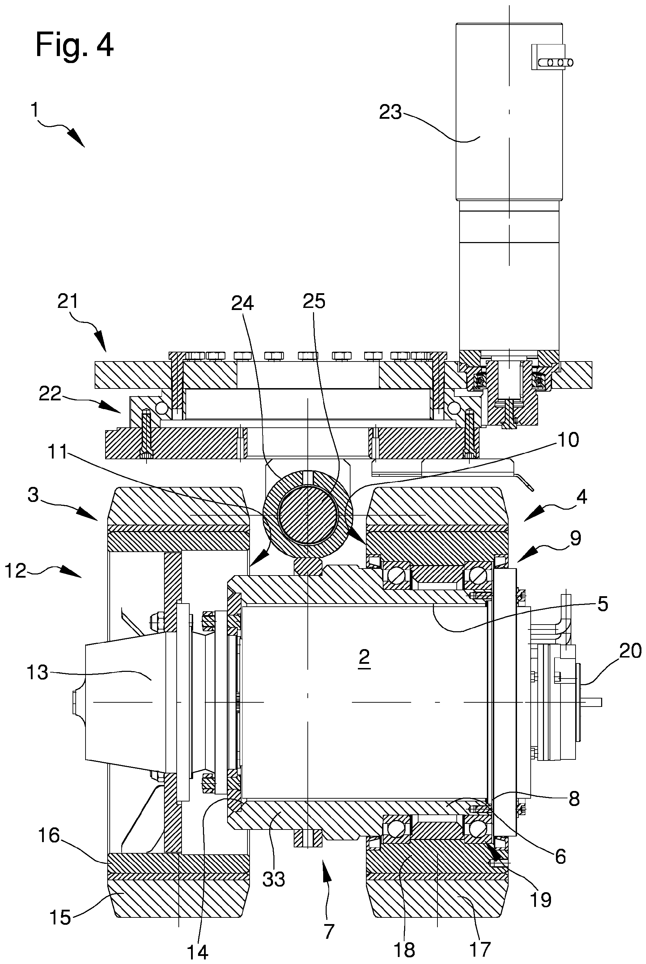

Figure 4 is a vertical sectional view of the appliance with motorized wheels according to the invention; and

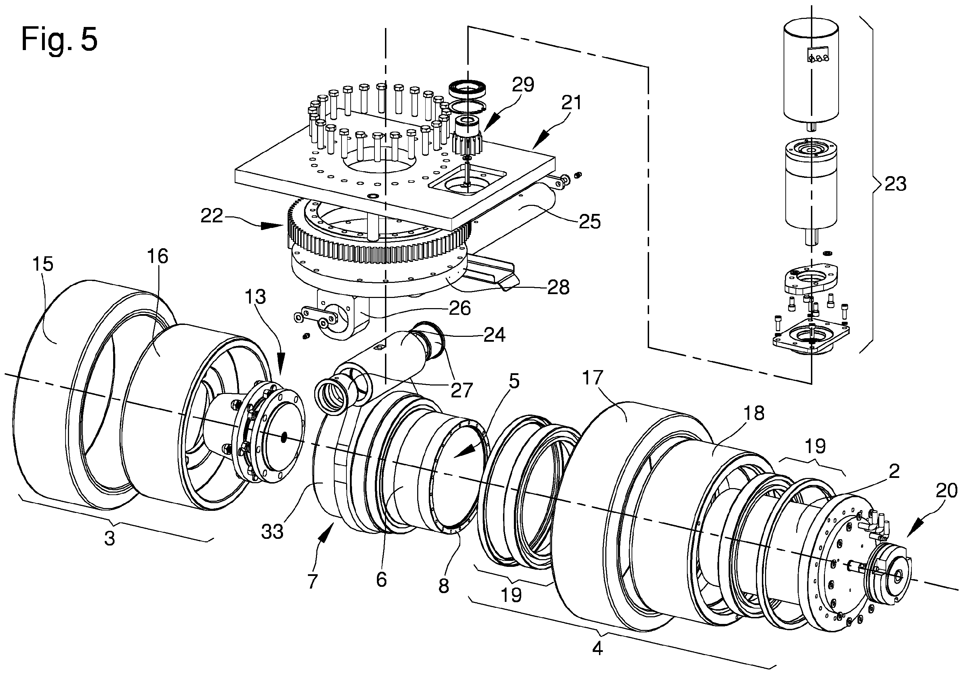

Figure 5 is an exploded view of the appliance with motorized wheels according to the invention.

### Embodiments of the Invention

With particular reference to such illustrations, globally indicated by 1 is an appliance with motorized wheels intended for the propulsion and support of vehicles, especially the type used in the military and agricultural sectors or in that of the transport of heavy loads.

The appliance 1 is provided to replace the wheels, both motorized and not, of prior art.

For example, a work vehicle of the type of a threshing machine, normally equipped with four wheels, can be supported and moved by four appliances according to the invention.

The appliance 1 includes a motor 2 which can be of the hydraulic type or of the electric type and, advantageously, also includes two wheels 3, 4, preferably parallel.

In detail, the invention envisages a first wheel 3 put in rotation by the motor 2 and a second wheel 4 that can also be a driving wheel, but which is preferably idle.

According to an important aspect of the invention, the appliance 1 has an internal housing 5 which contains the motor 2, which housing 5 is obtained in the hub 6 of one of the two wheels 3, 4, preferably the second idle wheel 4.

The hub 6 of the second wheel 4 and, therefore, the housing 5 of the motor 2, are shaped from a main body 7 of the appliance 1 which is fixed with respect to the common rotation axis of the wheels 3, 4.

In practice, the body 7 includes an annular offshoot that defines the hub 6.

To be precise, the housing 5 can be substantially cylindrical and can comprise a mouth 8 arranged substantially in correspondence to an outer side 9 of one of the wheels 3, 4, preferably of the second wheel 4.

From the mouth 8, the housing 5 extends into the inside of said appliance 1, in the direction of the other wheel, particularly the first driving wheel 3.

In practice, the wheels 3, 4 have respective inner sides 10, 11 turned towards one another and respective opposite outer sides 9, 12 turned towards the outside of the appliance 1.

The axis of the housing 5 and the rotation axis of the wheels 3, 4 can be substantially coinciding.

Consequently, the motor 2 is accommodated within the second wheel 4 which, during use, is located alongside the platform of the vehicle on which the appliance 1 is mounted.

The motor 2 is fastened to the hub 6 and is connected to the first wheel 3 by means of a reduction gear 13, preferably housed centrally to the first wheel 3 and connected to it so as to drag it in rotation.

This way, motor 2 and reduction gear 13 are advantageously integrated within the wheels 3, 4.

In practice, the body 7 preferably shapes an annular portion which includes the hub 6 and a central tubular portion 33, which separates the two wheels 3, 4, within which the housing 5 is extended as far as an output 14 opposite the above-mentioned mouth 8.

Consequently, the housing 5 is partially obtained in the hub 6 and partially in such central portion 33.

The reduction gear 13 is fastened to the main body 7 in correspondence to such output 14, where the motor 2 is connected to the reduction gear 13 itself.

The housing 5 is sized in such a way as to contain the motor 2 substantially in its entirety, so that the extremity of the motor 2 opposite the reduction gear 13 is substantially located on the plane of the above-mentioned outer side 9 of the second wheel 4, so as not to protrude.

To the motor 2 a braking device 20 can be fastened, e.g., of the electromagnetic type.

The first wheel 3 comprises a tyre 15, connected to a rim 16 which is in practice keyed on a rotating member of the reduction gear 13.

The second wheel 4 comprises its own tyre 17 and its own rim 18 associated sliding with the hub 6 with the interposition of friction reduction means 19.

The invention has very compact overall dimensions, thanks to the fact that the appliance 1 accommodates inside it the motor 2 and the reduction gear 13, which means it can also be fitted to vehicles where the platform does not envisage, in correspondence to the housing for the wheels 3, 4, a specific space for freely housing the motor 2.

At the same time, the invention replaces the single wheels of large dimensions with a pair of wheels 3, 4 of reduced dimensions, to lower the centre of gravity of the load.

Preferably, the invention also includes a supporting structure 21, 22, 23 to which the above body 7 is connected by means of a hinge 24, 25, 26.

The hinge 24, 25, 26 can be made up of a sleeve 24, shaped by the body 7, and of a pair of rings 26 fixed to the structure 21, 22, 23, rotatably connected by means of a pin 25 inserted in them, with if necessary the interposition of bushes 27 or the like.

The hinge 24, 25, 26 is preferably perpendicular to the rotation axis of the two wheels 3, 4 and is arranged on a plane parallel to and placed between the wheels 3, 4 themselves.

During use, the axis of hinge 24, 25, 26 is horizontal.

The hinge 24, 25, 26 is functionally associated with self-levelling means (not shown), comprising e.g. one or more hydraulic cylinders, which allow cushioning the swinging of the wheels 3, 4 around the hinge 24, 25, 26 and allow them to return to their original position.

In practice, thanks to the cooperation between hinge 24, 25, 26 and self-levelling means, the vehicle equipped with the appliance 1 of the invention can easily move on uneven ground.

In fact, the wheels 3, 4 can tilt to follow the conformation of the ground, wherever this is uneven, and then spontaneously return to horizontal axis position in the areas where the ground is flat.

The structure 21, 22, 23 can comprise a reference frame 21 and steering means 22, 23 to rotate the body 7 with respect to the frame 21, in order to steer the vehicle on which the appliance 1 is mounted.

In practice, the frame 21 is fastened integral to the platform, while the body 7 can rotate, with respect to an axis in use vertical and orthogonal to that of rotation of the wheels 3, 4 and to that of the hinge 24, 25, 26.

The steering means 22, 23 can include a steering motor 23, e.g., electric, supported by the frame 21, the latter preferably comprising an upper plate 21. The steering means 22, 23 then comprise a thrust bearing 22 fixed to a lower plate 28, to which the aforementioned rings 26 are fixed.

The steering motor 23 operates the thrust bearing 22 in rotation by means of the use of a pinion 29.

In the embodiment shown in the illustrations, the steering motor 23 is mounted vertically above the plate 21.

Alternative solutions cannot however be ruled out wherein the steering motor 23 is mounted horizontally.

In the same way, other embodiments are possible wherein the steering motor 23 is mounted below the plate 21.

It is in fact underlined that, by means of a gear unit different from the simple thrust bearing 22/pinion 29 coupling shown in the illustrations, the steering motor 23 can be arranged at will horizontally either above or below the plate 21. To this must be added that the steering motor 23 can also be mounted vertically below the plate 21, being careful to arrange it at an adequate distance from the wheels 3, 4 so as to avoid reciprocal contact.

For this purpose, it should be noticed that it is enough to place one or more gear wheels or other transmission systems between the pinion 29 and the thrust bearing 22 to permit moving the steering motor 23 away from the thrust bearing 22 without changing the operation of the appliance 1.

The arrangement of the steering motor 23 horizontally and/or below the plate 21 on the one hand permits lowering the centre of gravity of the appliance 1 and, therefore, more in general, of the vehicle on which it is mounted and, on the other hand, leaving clear and without obstacles, completely or only in part, the space above the plate 21, which can be advantageously exploited for other uses. It has in practice been ascertained how the invention achieves the proposed objects and in particular the fact is underlined that the proposed appliance 1 integrates the propulsion motor 2 and the reduction gear 13 within the wheels 3, 4, so as to strongly reduce overall dimensions.

It is also repeated that the invention allows lowering the centre of gravity of the loads and the use of motorized wheels for transport on uneven ground.

## Claims

1. Appliance (1) with motorized wheels comprising a first wheel (3) and a motor (2) able to put in rotation said first wheel (3), at least a second wheel (4), and a main body (7) which forms a housing (5) and a wheel hub (6), the housing (5) containing said motor (2) **characterized by** the fact that:
- said second wheel (4) is idle;
- said main body (7) forms the hub (6) of said second wheel (4); and
- said appliance (1) comprises a supporting structure (21, 22, 23) to which said body (7) is connected by means of a hinge (24, 25, 26), wherein the axis of said hinge (24, 25, 26) is horizontal in use and perpendicular with respect to a common rotation axis around which said first wheel (3) and said second wheels (4) rotate.

2. Appliance (1) according to claim 1, **characterized by** the fact that said housing (5) comprises a mouth (8) arranged substantially in correspondence to an outer side (9) of said second wheel (4) and which extends towards the inside of said appliance (1).

3. Appliance (1) according to one or more of the preceding claims, **characterized by** the fact that said first wheel (3) and said second wheel (4) are parallel.

4. Appliance (1) according to one or more of the preceding claims, **characterized by** the fact that it comprises a reduction gear (13) connected to said motor (2) and able to drag in rotation said first wheel (3).

5. Appliance (1) according to claim 4, **characterized by** the fact that said reduction gear (13) is arranged centrally to said first wheel (3).

6. Appliance (1) according to claim 5, **characterized by** an output (14) in said main body (7), through which said motor (2) connects to said reduction gear (13).

7. Appliance (1) according to one or more of the preceding claims, **characterized by** the fact that said hinge (24, 25, 26) is arranged on a plane parallel to and placed between said wheels (3, 4).

8. Appliance (1) according to one or more of the preceding claims, **characterized by** the fact that said structure (21, 22, 23) comprises a reference frame (21) and steering means (22, 23) to rotate said main body (7) with respect to said frame (21), around a vertical axis.

## Patentansprüche

1. Vorrichtung (1) mit motorisierten Rädern umfassend ein erstes Rad (3) und einen Motor (2), der in der Lage ist, das erste Rad (3) in Drehung zu versetzen, mindestens ein zweites Rad (4) und einen Grundkörper (7), der ein Gehäuse (5) und eine Radnabe (6) bildet, wobei das Gehäuse (5) den Motor (2) enthält, **dadurch gekennzeichnet, dass**:
- sich das zweite Rad (4) im Leerlauf befindet;
- der Grundkörper (7) die Nabe (6) des zweiten Rads (4) bildet; und
- die Vorrichtung (1) eine Tragkonstruktion (21, 22, 23) umfasst, mit welcher der Körper (7) mittels eines Scharniers (24, 25, 26) verbunden ist, wobei die Achse des Scharniers (24, 25, 26) im Einsatz horizontal und im rechten Winkel in Bezug auf eine gemeinsame Drehachse, um die sich das erste Rad (3) und das zweite Rad (4) drehen, angeordnet ist.

2. Vorrichtung (1) nach Anspruch 1, **dadurch gekennzeichnet, dass** das Gehäuse (5) eine Öffnung (8) umfasst, die im Wesentlichen entsprechend einer Außenseite (9) des zweiten Rads (4) angeordnet ist und die sich zu dem Innern der Vorrichtung (1) hin erstreckt.

3. Vorrichtung (1) nach einem oder mehreren der vorstehenden Ansprüche, **dadurch gekennzeichnet, dass** das erste Rad (3) und das zweite Rad (4) parallel zueinander angeordnet sind.

4. Vorrichtung (1) nach einem oder mehreren der vorstehenden Ansprüche, **dadurch gekennzeichnet, dass** sie ein Untersetzungsgetriebe (13) umfasst, das mit dem Motor (2) verbunden ist, und das in der Lage ist, das erste Rad (3) in Drehung zu versetzen.

5. Vorrichtung (1) nach Anspruch 4, **dadurch gekennzeichnet, dass** das Untersetzungsgetriebe (13) zentrisch zu dem ersten Rad (3) angeordnet ist.

6. Vorrichtung (1) nach Anspruch 5, **gekennzeichnet durch** einen Abtrieb (14) in dem Grundkörper (7), durch welchen sich der Motor (2) mit dem Untersetzungsgetriebe (13) verbindet.

7. Vorrichtung (1) nach einem oder mehreren der vorstehenden Ansprüche, **dadurch gekennzeichnet, dass** das Scharnier (24, 25, 26) in einer Ebene parallel zu den Rädern angeordnet und zwischen den Rädern (3, 4) platziert ist.

8. Vorrichtung (1) nach einem oder mehreren der vorstehenden Ansprüche, **dadurch gekennzeichnet, dass** die Konstruktion (21, 22, 23) einen Bezugsrahmen (21) und Lenkmittel (22, 23) umfasst, um den Grundkörper (7) in Bezug auf den Rahmen (21) um eine vertikale Achse zu drehen.

## Revendications

1. Bloc (1) à roues motorisées comprenant une première roue (3) et un moteur (2) apte à mettre en rotation ladite première roue (3), au moins une seconde roue (4), et un corps principal (7) qui forme un logement (5) et un moyeu de roue (6), le logement (5) contenant ledit moteur (2), **caractérisé en ce que** :
- ladite seconde roue (4) est libre ;
- ledit corps principal (7) forme le moyeu (6) de ladite seconde roue (4) ; et
- ledit bloc (1) comprend une structure de support (21, 22, 23) à laquelle ledit corps (7) est relié au moyen d'une articulation (24, 25, 26), dans lequel l'axe de ladite articulation (24, 25, 26) est horizontal en utilisation et perpendiculaire par rapport à un axe de rotation commun autour duquel ladite première roue (3) et ladite seconde roue (4) tournent en rotation.

2. Bloc (1) selon la revendication 1, **caractérisé en ce que** ledit logement (5) comprend une bouche (8) agencée sensiblement en correspondance avec un côté extérieur (9) de ladite seconde roue (4) et qui s'étend vers l'intérieur dudit bloc (1).

3. Bloc (1) selon l'une ou plusieurs des revendications précédentes, **caractérisé en ce que** ladite première roue (3) et ladite seconde roue (4) sont parallèles.

4. Bloc (1) selon l'une ou plusieurs des revendications précédentes, **caractérisé en ce qu'**il comprend un engrenage réducteur (13) relié audit moteur (2) et apte à entraîner en rotation ladite première roue (3).

5. Bloc (1) selon la revendication 4, **caractérisé en ce que** ledit engrenage réducteur (13) est agencé de manière centrale par rapport à ladite première roue (3).

6. Bloc (1) selon la revendication 5, **caractérisé par** une sortie (14) dans ledit corps principal (7), à travers laquelle ledit moteur (2) est relié audit engrenage réducteur (13).

7. Bloc (1) selon l'une ou plusieurs des revendications précédentes, **caractérisé en ce que** ladite articulation (24, 25, 26) est agencée selon un plan parallèle à et placé entre lesdites roues (3, 4).

8. Bloc (1) selon l'une ou plusieurs des revendications précédentes, **caractérisé en ce que** ladite structure (21, 22, 23) comprend un bâti de référence (21) et des moyens d'orientation (22, 23) pour faire tourner en rotation ledit corps principal (7) par rapport audit bâti (21), autour d'un axe vertical.
